# FASCICULE DE BREVET EUROPEEN

(11) **EP 2 424 704 B1**
(45) Date de publication et mention de la délivrance du brevet: **07.06.2017**
(21) Numéro de dépôt: 10715276.1
(22) Date de dépôt: 28.04.2010
(51) Int. Cl.: B23K 9/127, B23K 37/02

(54) **SYSTEME MECANIQUE DE GUIDAGE AUTOMATIQUE D'UNE OU PLUSIEURS TORCHES D'UNE UNITE DE SOUDAGE AVEC TROIS AXES DE PIVOTEMENT POUR LA (LES) TORCHE(S)**
MECHANISCHES SYSTEM ZUR AUTOMATISCHEN FÜHRUNG VON EIN ODER MEHR LÖTLAMPEN EINES SCHWEISSGERÄTS MIT DREI DREHACHSEN FÜR DIE LÖTLAMPE ODER LÖTLAMPEN
MECHANICAL SYSTEM FOR AUTOMATIC GUIDING OF ONE OR MORE TORCHES OF A WELDING UNIT WITH THREE PIVOTING AXES FOR THE TORCH OR TORCHES

(30) Priorité: 29.04.2009 FR 0952809
(43) Date de publication de la demande: 07.03.2012
(73) Titulaire: Serimax Société Par Actions Simplifiée, 77290 Mitry Mory (FR)
(72) Inventeur: L'ARVOR, Eric, F-02600 Villers Cotterets (FR); DESTOUCHES, Denis, F-02600 Dampieux (FR)
(74) Mandataire: de Kernier, Gabriel
(86) Numéro de dépôt international: PCT/EP2010/055733
(87) Numéro de publication internationale: WO 2010/125112

(56) Documents cités:
- EP-A1- 0 439 975
- DE-A1- 2 733 035
- JP-A- 51 123 753
- JP-A- 2001 276 973
- US-A- 3 084 246

## Description

La présente invention concerne un système mécanique de guidage automatique d'une ou plusieurs torches d'une unité de soudage par exemple à l'arc, dans une gorge délimitée entre les deux surfaces d'extrémité chanfreinées de deux pièces métalliques à souder l'une à l'autre conformément au préambule de la revendication 1 (voir, par exemple, EP 0 439 975), du type comprenant un chariot principal qui se déplace le long d'un guide fixe sensiblement parallèle à la gorge un chariot secondaire articulé et fixé au chariot principal et équipé d'un bloc support de torche(s) et d'un dispositif de guidage comprenant des organes de roulement en contact avec les surfaces des pièces métalliques qui bordent la gorge et des organes de palpage qui pénètrent à l'intérieur de la gorge, ledit dispositif comprenant deux organes de palpage qui sont respectivement en contact avec les deux parois latérales de la gorge et qui sont respectivement situés vers l'avant et vers l'arrière du chariot secondaire en considérant la direction de déplacement du chariot principal.

D'une manière générale, une machine automatique de soudage fait intervenir un nombre important de paramètres de fonctionnement liés au procédé de soudage utilisé, aux caractéristiques géométriques de la gorge délimitée entre les deux pièces à souder, aux conditions de soudage (nature, forme et position des pièces...). Dans la majorité des applications industrielles, l'opération de soudage se réalise en plusieurs passes, sachant que l'obtention d'une soudure de qualité dépend de la précision avec laquelle est effectuée la première passe. Il est donc important que l'usinage des surfaces d'extrémité. pour délimiter en elles la gorge soit le plus régulier possible et qu'on obtienne un système apte à suivre la géométrie de la gorge pour que la soudure soit appliquée très précisément au fond et dans l'axe de la gorge

Aussi, il est couramment pratiqué un usinage sous la formé d'un chanfrein aux deux extrémités des pièces à souder. Suivant l'ouverture donnée au chanfrein, on obtient une gorge plus ou moins évasée sachant qu'une gorge large augmente le nombre de passes et le temps de soudage et qu'une gorge étroite sans présenter ces inconvénients, n'est pas sans poser des problèmes de précision pour le guidage.

Ainsi, même avec un tel usinage, la gorge délimitée par les deux chanfreins ne peut présenter des caractéristiques géométriques constantes sur toute sa longueur. En effet, une fois les deux surfaces d'extrémité mise en regard l'une de l'autre, les tolérantes de fabrication des pièces et d'usinage des chanfreins entraîneront nécessairement des variations de largeur et de dénivelé au niveau de la gorge. Dans le cas où les deux pièces à souder sont des tubes de relativement grande longueur par exemple et avec une tolérance d'usinage des chanfreins de +/- 0,1 mm, il en résulte une largeur de gorge à +/- 0,2 mm avec des dénivelés de 2 à 3 mm dus en particulier à l'ovalisation des tubes.

Dans le cas où le procédé de soudage est un soudage à l'arc électrique visible sous gaz protecteur, les électrodes de soudage portées par les torches doivent pénétrer dans la gorge et se situer à une distance déterminée des parois et du fond de la gorge ou de la dernière couche de soudure déposée. Dans ces conditions, la précision du système de guidage prend toute son importance notamment lorsqu'on utilise ce procédé de soudage dans une gorge étroite.

On connaît dans l'art antérieur, du document JP-2001-276973, un dispositif de soudage automatique vers le haut qui ne comporte pas de rail de guidage.

En conséquence, la précision de la soudure notamment lors de la première passe, implique, un positionnement précis des électrodes de soudage non seulement par rapport au plan médian de la gorge mais également par rapport au fond de la gorge. Ces deux positionnements respectivement sensibles aux variations de largeur et de dénivelé de gorge seront d'autant plus respectés que le système de guidage est précis.

Pour ce faire, on a proposé dans EP 0 439 975, un système de guidage pouvant assurer avec précision le positionnement des torches de soudage à l'intérieur de la gorge et qui est capable de prendre en compte la variation de largeur et de dénivelé de celle-ci et améliorer ainsi la qualité du soudage qui lui est imposée dans certaines applications en particulier pour le soudage bout à bout de tronçons de tube constituant dés conduites.

Ainsi, ce système mécanique de guidage automatique d'une ou de plusieurs torches d'une unité de soudage à l'arc dans une gorge délimitée par les surfaces d'extrémité chanfreinées de deux pièces métalliques à souder l'une à l'autre, du type comprenant un chariot principal qui se déplace le long d'un guide fixe parallèle à la gorge, un chariot secondaire qui est relié au chariot principal par un ensemble de liaison articulé et qui est équipé d'un bloc-support de torche(s) et d'un dispositif de guidage comprenant des organes de roulement en contact avec les surfaces des pièces métalliques bordant ladite gorge et des organes de palpage qui pénètrent à l'intérieur de la gorge. Le dispositif de guidage comprend un premier ensemble dé palpage et de roulement qui est situé à l'avant du chariot secondaire, en considérant le sens de déplacement du chariot principal et qui comporte un organe de palpage avant en contact avec l'une des deux parois latérales de la gorge et un organe de roulement avant roulant sur la surface de l'une des deux pièces métalliques d'un côté de la gorge. Le dispositif comprend en outre un deuxième ensemble de palpage et de roulement qui est situé à l'arrière du chariot secondaire et qui comporte un organe de palpage arrière en contact avec l'autre paroi latérale de à gorge et un organe de roulement arrière roulant sur la surface de l'autre pièce métallique de l'autre côté de la gorge. La ou les torches sont alors montées sur la chariot secondaire de façon à se trouver entré les premier et second ensembles de palpage et de roulement. L'ensemble de liaison articulé comprend un premier axe de pivotement qui est perpendiculaire à la direction du déplacement du chariot principal et est situé dans un plan parallèle au plan médian de la gorge et un deuxième axe de pivotement qui est perpendiculaire à la direction du déplacement du chariot principal et perpendiculaire au plan médian de la gorge, les premier et second axes de pivotement étant situés entre le premier et le second ensembles de palpage et de roulement. Il est en outre prévu des moyens de poussée latérale qui agissent sur le chariot secondaire pour le solliciter en pivotement autour du premier axe de manière à ce que chaque élément de palpage reste au contact de la paroi associée de la gorge et des moyens de poussée qui sollicitent en permanence les organes de roulement du chariot secondaire en appui sur les pièces métalliques qui y sont respectivement associées.

Grâce à ces différentes positions, les torches étant disposées entre les organes de palpage, les variations de largeur et de dénivelé de la gorge ne sont que faiblement répercutées au niveau des électrodes de soudage si bien que leur écart par rapport au plan médian et au fond de la gorge est réduite au minimum, ce qui implique un meilleur suivi des caractéristiques géométriques de la gorge et une meilleure précision dans le soudage.

Cependant, on a pu se rendre compte en cours d'exploitation que lors de la mise en place du chariot secondaire au niveau du plan de joint, il peut arriver que l'axe machine ne soit pas perpendiculaire à celui du plan de joint ou que l'axe machine ne soit pas concentrique à celui des conduits à souder. Le chariot secondaire est alors entraîné le long du plan de joint sans que les ensembles de palpage et de roulement ne soient efficaces ou bien il est alors nécessaire de repositionner le dispositif de soudage dans son ensemble.

Aussi, le but de l'invention est de proposer un système du type de celui décrit ci-dessus dans lequel on obtient un positionnement précis des torches de soudage mais en outre, on peut pallier les imprecisions de positionnement du chariot secondaire lorsque celui-ci est .abaissé, sur le plan de joint, notamment pour aligner l'axe des torches avec l'axe du plan dé joint même lorsque l'axe de la machine n'est pas perpendiculaire à celui du plan de joint (fausses couples) ou quand l'axe machine n'est pas concentrique à celui des conduits (diamètres de conduits différents). A cet effet, l'invention a pour l'objet un système mécanique de guidage automatique d'une ou plusieurs torches d'une unité de soudage dans une gorge délimitée par les surfaces d'extrémité chanfreinées de deux pièces métalliques à souder l'une à l'autre tel que défini dans la revendication 1.

Ainsi, de manière avantageuse, lorsque le chariot secondaire est amené à l'aplomb de l'axe de chanfrein de manière décalée par rapport à cet axe, le troisième axe de pivotement permet de positionner le chariot secondaire sur ledit axe du chanfrein tandis que les moyens de poussée autorisent le pivotement et permettent de retrouver la position d'origine du chariot secondaire après chaque opération de soudage.

Il est entendu que lorsqu'on définit un axe par rapport au plan médian de la gorge, on se trouve dans une situation idéale de référence du système mécanique de guidage de l'invention par rapport au plan de joint, les axes de pivotement définis permettant de rattraper une situation non idéale.

Selon une forme de réalisation préférée, l'ensemble de liaison articulé comporte un bras de liaison portant à une extrémité le chariot secondaire au-dessus de la gorge et qui, à son extrémité opposée, est monté sur le chariot principal par l'intermédiaire d'un moyen, ledit bras étant monté pivotant sur le moyeu autour du troisième axe de pivotement perpendiculaire à la direction du déplacement du chariot principal.

Ce troisième axe de pivotement est donc bien extérieur au bloc support de la ou des torche(s) tandis que des moyens de poussée latérale sont prévus qui agissent sur le bras pour le solliciter en pivotement autour du troisième axe autour de sa position d'origine.

En outre, le bras de liaison par l'intermédiaire du moyeu est monté pivotant sur le chariot principal autour d'un quatrième axe, perpendiculaire au plan de joint et au sens de déplacement du chariot principal, ledit bras de liaison étant entraînable en pivotement dans un plan sensiblement parallèle au plan du guide circulaire entre une de déplacement du chariot principal, ledit bras de liaison étant entraînable en position où il est abaissé pour amener le chariot secondaire sur le plan de joint pour effectuer un soudage et une position où il est relevé une fois le soudage achevé.

Ainsi, lorsqu'on abaisse à l'aide du bras de liaison le chariot secondaire sur l'axe du chanfrein, même si cet axe est légèrement décalé par rapport à l'axe du bras de sorte que l'axe des moyens de palpage et de roulement se trouve lui aussi légèrement décalé par rapport à l'axe du chanfrein, le pivotement du bras autour du troisième axe de pivotement permet d'aligner l'axe des moyens de palpage et de roulement qui se trouvent ainsi loger dans la gorge et donc l'axe de la ou des torches avec l'axe du chanfrein. Une fois, le soudage achevé, les moyens de poussée permettent au bras de liaison de retrouver sa position d'origine lorsque celui-ci est relevé.

En effet, le plan du chanfrein peut ne pas être tout à fait perpendiculaire à l'axe du conduit en construction par exemple si l'accostage des deux éléments tubulaires à relier forme une gorge qui n'est pas perpendiculaire aux éléments tubulaires à assembler. Ainsi, si le dispositif de soudage est positionné perpendiculairement au conduit et que la gorge n'est pas perpendiculaire au conduit, le suivi de joint sera malgré tout possible à l'aide du système mécanique de guidage de l'invention, le troisième axe de pivotement au niveau du moyeu permettant l'alignement des torches sur le plan de joint

De même, l'accostage linéaire des conduits à assembler peut ne pas être obtenu à cause de contraintes géométriques, de soudure linéaire située en partie supérieure. Dans ce cas, les conduits ne sont pas alignés et le dispositif de soudage ne peut être perpendiculaire aux conduits ni même être concentriques à ceux-ci. Toutefois, le suivi de joint reste possible, le troisième axe de pivotement permettant de compenser le désalignement par pivotement du bras de liaison sur le moyeu et l'abaissement du bras sur le plan de joint permet de rétablir la concentricité.

Selon une forme de réalisation préférée, le chariot secondaire porte en outre un bloc-support pour au moins une torche de soudage, ledit bloc-support étant mobile par rapport au chariot secondaire de manière à pouvoir régler la profondeur de pénétration de la au moins une torche de soudage à l'intérieur de la gorge après chaque passe de soudage.

De manière très avantageuse, le système mécanique de guidage automatique d'une ou de plusieurs torches, d'une unité de soudage dans une gorge délimitée par les surfaces d'extrémité chanfreinées de deux pièces métalliques à souder l'une à l'autre selon l'invention permet en outre de proposer l'utilisation de deux torches de soudage indépendantes l'une de l'autre.

Selon une variante de réalisation préférée, le bloc-support porte deux torches de soudage, l'une desdites torches de soudage étant fixe par rapport au bloc-support et l'autre torche de soudage étant mobile par rapport au bloc-support de manière à pouvoir régler de manière indépendante la profondeur de pénétration de ladite torche par rapport à la torche fixe.

La présente invention propose donc d'utiliser au moins deux torches mécaniquement liées par le bloc-support, par exemple dans une même buse de soudage donc dans la même protection gazeuse, mais montées indépendantes dans leur fonction de monte et de baisse, donc indépendantes en hauteur d'arc électrique en cas d'électrodes pour un soudage à l'arc. Ainsi, leurs asservissements, gestion de la hauteur de vol ou longueur de fil sorti, sont indépendants, et de ce fait les lois d'asservissement sont dissociées et les gains variables. Il est donc possible d'associer au sein d'une même buse de soudage des procédés de soudage dont les vitesses de réaction à l'environnement doivent être différentes les unes des autres.

Le système de guidage mécanique selon l'invention permet avantageusement l'utilisation d'une telle tête de soudage pourvue de deux torches qui sont régies chacune selon des lois de régulation variables et paramétrables pour chaque passe de soudage. En effet le système de guidage selon l'invention permet de contrôler parfaitement le centrage des torches et de proposer un référentiel par rapport aux bords du chanfrein connu.

Bien entendu, la présente invention s'applique aussi pour des torches de soudage indépendantes l'une de l'autre en fonctionnement et pouvant également être indépendantes d'un point de vue mécanique, c'est-à-dire portées par des supports mécaniques indépendants. De même, en ce qui concerne la protection gazeuse, on peut envisager d'utiliser une protection séparée pour chaque torche, ou encore une protection gazeuse unique à l'aide d'une monobuse et de flasques mobiles latéraux, ou toute autre forme de mise en oeuvre d'une protection gazeuse appropriée.

Lorsque les torches de soudage sont portées par le même bloc-support, il est alors possible d'agir deux types de mécanique. Dans un premier type, la première torche ou torche origine est la torche fixe sur le bloc support ce qui permet un mouvement d'approcbe et une gestion de la hauteur, pour le réglage de la hauteur de fil sorti dans le cas d'une procédé MIG, pour le réglage de la distance pièce électrode dans un procédé TIG, pour le réglage de l'altitude du laser dans le cas d'un procédé laser, tandis que la torche suiveuse est la torche mobile dont le mouvement relatif indépendant de celui de la torche origine permet la gestion de la hauteur comme évoqué précédemment.

Dans le second type, la torche suiveuse est la torche fixe ce qui permet un mouvement d'approche et une gestion de la hauteur de fil sorti tandis que la torche origine est la torche mobile dont le mouvement indépendant assure la gestion de fil sorti.

On décrira maintenant l'invention plus en détails en référence au dessin dans lequel :

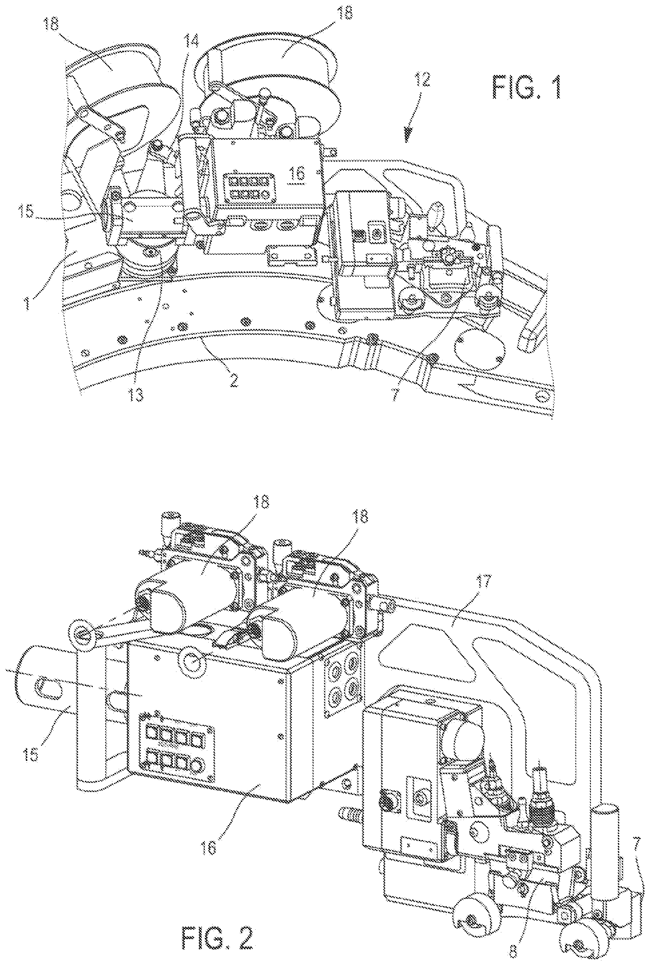

La figure 1 représente une vue d'ensemble d'un système de guidage selon l'invention ;
La figure 2 représente une vue en perspective avant d'un ensemble bras de liaison-chariot secondaire ;

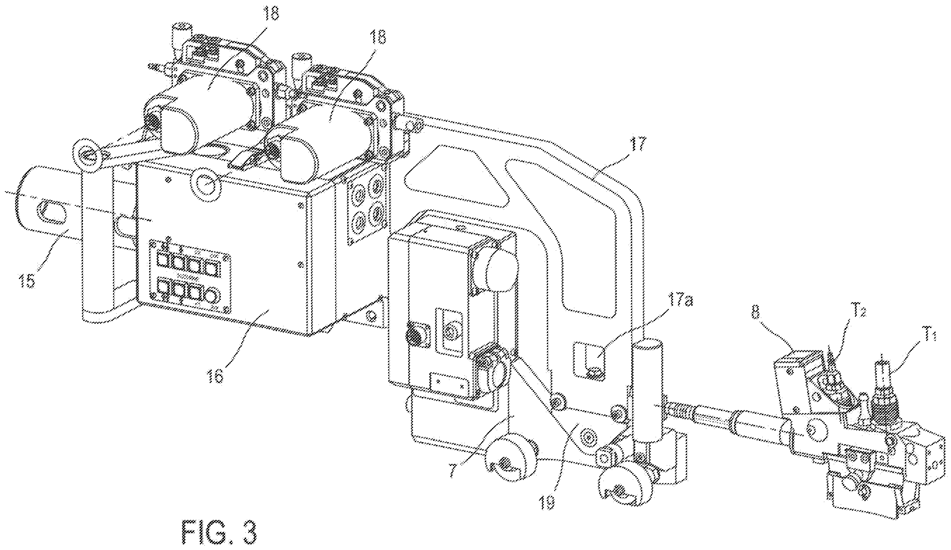

La figure 3 représente une vue en perspective latérale de l'ensemble de la figure 2, le bloc support étant désolidarisé du bras ;

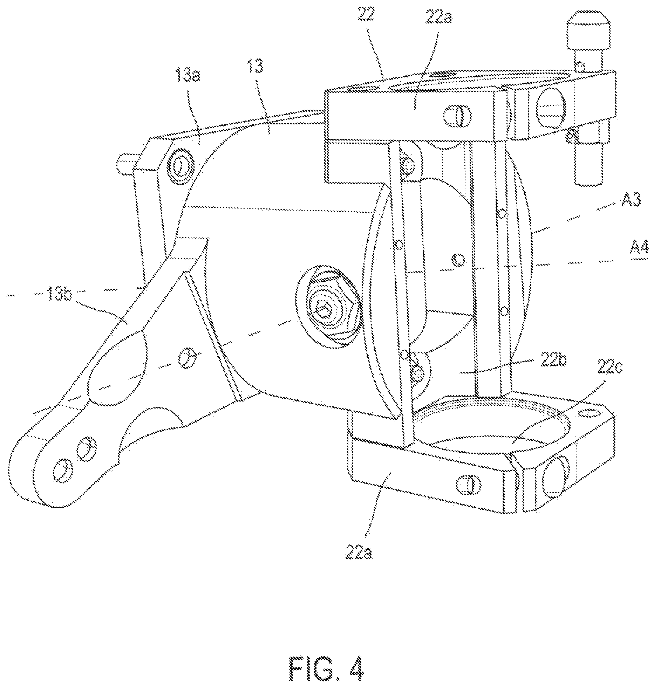

La figure 4 représente une vue en perspective latérale d'un moyen de fixation du bras sur le chariot-principal ;
Les figures 5a et 5b représentent respectivement une vue extrêmement schématique du dessus d'un ensemble bras-chariot secondaire monté sur un moyeu ;

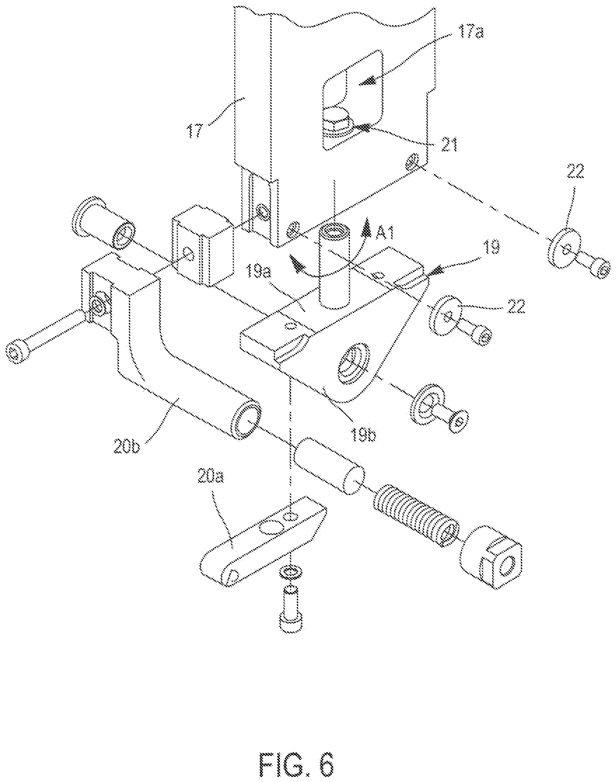

La figure 6 représente une vue en perspective éclatée de l'ensemble articulé au niveau de l'axe de pivotement A1 ;

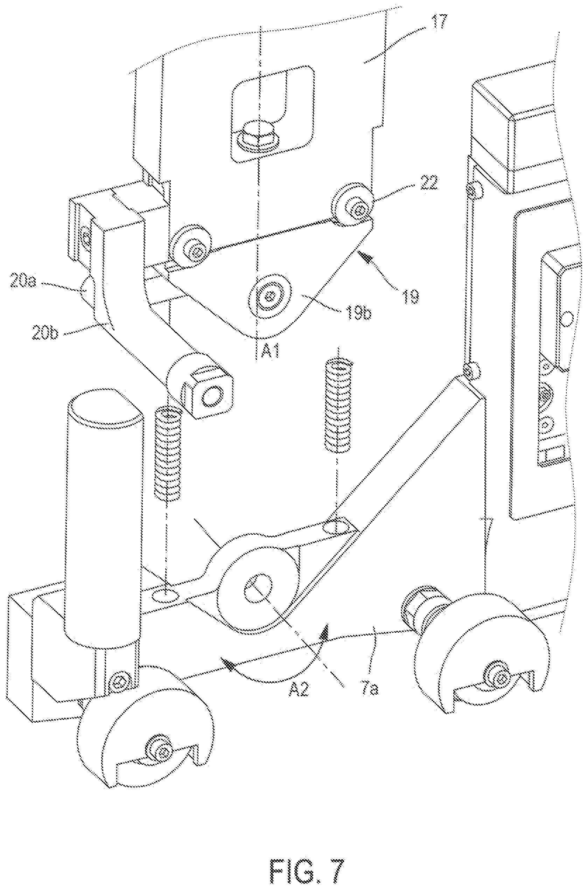

La figure 7 représente une vue en perspective éclatée de l'ensemble articulé au niveau de l'axe de pivotement A2;
Les figures 8a et 8b représentent respectivement une vue en perspective latérale d'un bloc support ; et
Les figures 9a à 9h représentent chacune schématiquement un bloc support selon des variantes de réalisation d'un bloc support selon l'invention.

Le système de guidage mécanique automatique de torches d'une unité de soudage tel que schématiquement représenté comprend un chariot 1 dit principal qui se déplace sur un guide circulaire 2 parallèlement à la gorge 3 circulaire, délimitée par les deux surfaces d'extrémité chanfreinées de deux tubes métalliques 4, 5 à souder l'un à l'autre. Un chariot 7 dit secondaire est relié par un ensemble de liaison au chariot principal 1 et porte un bloc-support 8 de deux torches 9 formant une unité de soudage.

Le chariot secondaire 7 est équipé d'un dispositif de guidage mécanique comprenant des organes de palpage 10a, 10b et des organes de roulement 11a, 11b. Les deux organes de palpage 10a, 10b sont décalés l'un par rapport à l'autre en étant respectivement situés pour l'un 10a à l'avant du chariot secondaire 7 et l'autre 10b à l'arrière en considérant la direction de déplacement D du chariot principal 1. Il en est de même pour la position des deux organes de roulement 11a, 11b.

L'ensemble de liaison permettant de relier le chariot secondaire 7 et le chariot principal 1 forme un bras 12 de liaison dont une extrémité est montée entraînable en pivotement sur le chariot principal 1 et dont l'autre extrémité porte le chariot secondaire 7.

Le bras 12 de liaison est monté sur le chariot principal 1 à l'aide d'un moyeu 13 permettant l'entraînement en pivotement dudit bras 12 entre une position de baisse de l'unité de soudage sur la gorge 3 entre les conduits 4, 5 pour une opération de soudage et une position de levée de ladite unité de soudage lorsqu'il n'y a plus de soudage. Ce moyeu 13 est donc entraînable en rotation dans un plan parallèle au plan médian de la gorge 3 à l'aide de moyens d'entraînement en rotation tels qu'un vérin 14. Ce vérin 14 est par exemple pneumatique mais on peut également utiliser un actionneur électrique ou hydraulique.

Le bras de liaison 12 portant le chariot secondaire 7 est constitué d'une partie de bras 15 reliée à un boîtier de commande 16 sur lequel est monté une équerre 17 portant le chariot secondaire 7. Le boîtier de commande 16 est en outre conformé pour porter les fixations des coffrets dévidoirs 18 de fil fusible (métal d'apport).

Le dispositif de guidage porté par le chariot secondaire 7 est articulé suivant deux axes de pivotement A1, A2 perpendiculaires l'un à l'autre. L'axe A1 est perpendiculaire à la direction de déplacement D du chariot principal 1 et est situé dans un plan parallèle au plan médian de la gorge 3 de sorte que le dispositif de guidage peut pivoter autour de cet axe A1 pour permettre aux organes de palpage 10a, 10b de suivre la géométrie des parois de la gorge 4.

L'extrémité de l'équerre 17 constitue une pièce de liaison venant en appui sur l'embase 19a d'un étrier 19. L'axe de pivotement A1 du dispositif de guidage est formé par un pivot dont une extrémité est solidaire de l'embase 19a de l'étrier 19 et qui s'étend perpendiculairement à celle-ci. L'axe de pivotement A1 traverse un palier logé dans un passage prévu à l'extrémité de l'équerre 17 pour déboucher par son extrémité libre dans une ouverture centrale 17a de l'équerre 17. L'extrémité libre de l'axe A1 est filetée pour recevoir un écrou 21 et immobiliser ainsi axialement l'axe A1.

L'axe A2 est lui perpendiculaire au plan médian de la gorge 3 de sorte que le dispositif de guidage peut pivoter autour de cet axe A2 pour permettre aux organes de roulement 11a; 11b de suivre la géométrie des surfaces des pièces qui bordent la gorge 3.

L'axe de pivotement A2 du dispositif de guidage perpendiculaire à l'axe A1 est supporté par les deux flasques 19b de l'étrier 19, axe A2 sur lequel est articulé un platine 7a du chariot secondaire 7 qui porte le dispositif de guidage. Ainsi le dispositif de guidage peut pivoter d'une part directement autour de l'axe A2 et d'autre part à l'intérieur du palier par l'intermédiaire de l'étrier 19 et de l'axe A1.

Le chariot secondaire 7 est soumis en permanence à des forces de poussée qui se répercutent respectivement sur les organes de palpage 10a, 10b et les organes de roulement 11a, 11b.

Ainsi, l'étrier 19 porte au niveau de son embase, entre les deux flasques de l'étrier 19, un bras de levier 20a en saillie perpendiculaire à l'axe A1 et s'étendant dans un plan perpendiculaire au plan dans lequel s'étend l'axe A1. L'extrémité de l'équerre 17 comporte un organe de poussée 20b s'étendant perpendiculairement au bras de levier 20a dans un même plan. Cet organe de poussée 20b exerce donc une poussée sur ledit bras de levier 20a entraînant en rotation l'étrier 19 autour de l'axe A1 tandis que des butées 22 (vis / rondelle) fixées sur l'extrémité de l'équerre 17 limitent en rotation le débattement de l'étrier 19.

Le vérin 14 en abaissant le bras de liaison 12 sur le plan de joint exerce une force sur le chariot secondaire de sorte que celui-ci est sollicité en appui permanent par l'intermédiaire des organes de roulement 11a, 11b du dispositif de guidage sur les pièces 4, 5.

En outre, le système de guidage est articulé selon un troisième axe de pivotement A3 perpendiculaire au sens de déplacement du chariot principal 1 et parallèle au plan médian de la gorge 3, ledit axe A3 extérieur au bloc support 8 des torches et également au chariot secondaire 7 étant situé au niveau du moyeu 13 portant le bras de liaison 12 sur le chariot principal 1. Ce moyeu 13 est monté entraînable en rotation autour d'un axe de pivotement A4 sur le chariot principal 1 à l'aide d'une platine de fixation 13a et présente à sa périphérie une patte ou languette du en saillie radiale à l'extrémité de laquelle est monté l'extrémité de la tige d'un vérin 14, l'actionnement du vérin 14 déplaçant en translation l'extrémité de la patte 13b en saillie et provoquant l'entraînement en rotation du moyeu 13 par rapport au chariot principal 1 autour de l'axe A4.

Ce moyeu 13 porte en outre un étrier 22 dont les flasques 22a présentent respectivement un orifice 22b dans lequel se loge une extrémité du bras 12 portant à son autre extrémité le chariot secondaire 7. L'embase 22b de l'étrier 22 est en outre fixée au moyeu 13 de manière à pivoter autour dudit troisième axe de pivotement A3, des moyens de poussée tels que des ressorts 23 étant prévus qui agissent sur l'embase 22b de l'étrier 22 pour le solliciter en pivotement autour dudit troisième axe A3.

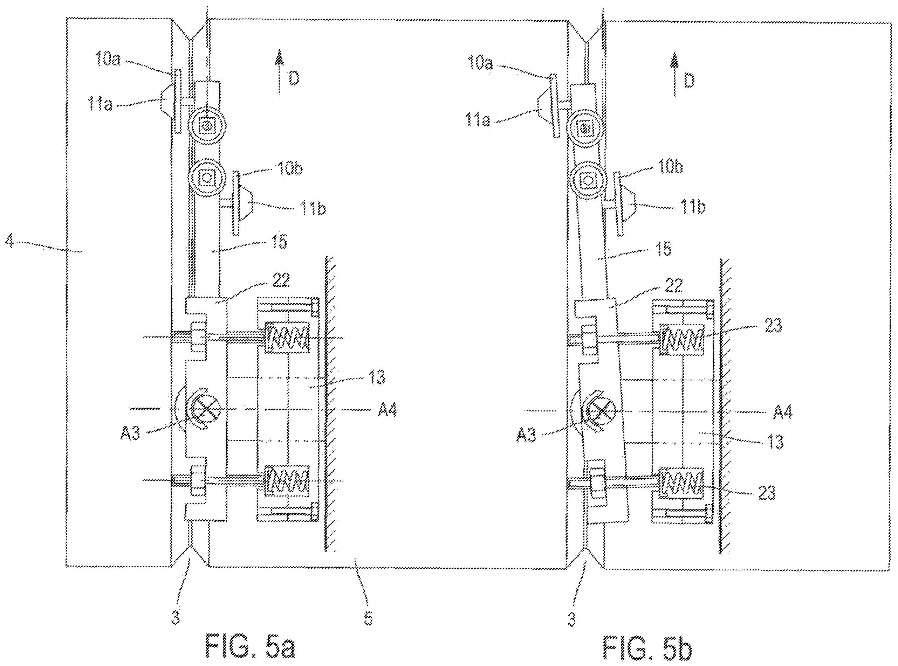

Ainsi le moyeu 13 portant le bras de liaison 12 pourvu du chariot secondaire 7 est entraînable d'une part en pivotement entre une position de levée du chariot secondaire 7 par rapport à la gorge 3 et une position abaissée sur ladite gorge 3. Mais en outre, l'entraînement en pivotement du bras 12, et donc du chariot 7 et donc du système de guidage autour de l'axe de pivotement A3 permet d'aligner l'axe dudit bras 12 avec l'axe de la gorge 3 (voir figure 5b) même lorsque l'axe dudit bras 12 est légèrement décalé de l'axe de la gorge 3 (voir figure 5a).

En entraînant en pivotement le bras 12, selon l'axe A3, le système de guidage qui est légèrement décalé se repositionne dans la gorge 3 de manière appropriée. Une fois, le soudage réalisé, le chariot secondaire 7 est relevé et les moyens de poussée 23 ramène le bras 12 en position d'origine.

Dans l'exemple représenté, le bloc-support 8 porte deux torches T1 et T2 situées entre les deux ensembles de palpage et de roulement 10a, 11a et 11a, 11b.

Le bloc-support 8 est amovible par rapport au chariot secondaire 7 comme cela est visible sur la figure et il est en outre mobile par rapport audit chariot secondaire 7 dé manière à pouvoir régler la profondeur de pénétration des électrodes E1 et E2 à l'intérieur de la gorge 3 après chaque passe de soudage. A cet effet, le bloc-support 8 est monté coulissant le long de deux glissières portées par la platine 7a du chariot secondaire 7. Pour régler de manière précise la profondeur de pénétration des électrodes E1 et E2, on prévoit en outre des butées de hauteur différente montées sur un barillet tournant. Un vérin fixé à la platine du chariot secondaire 7 a sa tige de piston solidaire du bloc-support pour le déplacer le long des glissières afin d'amener un pion du bloc-support 8 au contact de la butée sélectionnée au niveau du barillet. En outre, le bloc-support 8 peut être animé d'un mouvement d'oscillation de fréquence et d'amplitude réglables par un moyen mécanique ou électrique connu en soi.

De plus pour plus de précision et gérer les intensités. En effet, la longueur de fil sortie délimite la résistance de l'arc (R) et la tension d'arc est maintenue constante par le générateur (U). Agir sur la longueur de fil en s'approchant du cordon de soudure permet de diminuer R ou en s'éloignant du cordon de soudure permet d'augmenter R, c'est agir sur la valeur d'Intensité (I) « HOM ». Le bloc-support 8 porte deux torches de soudage liées de manière mécanique mais indépendante en hauteur, l'une desdites torches de soudage T1 étant fixe par rapport au bloc-support 8 et l'autre torche de soudage T2 étant mobile par rapport au bloc-support 8 de manière à pouvoir régler la profondeur de pénétration de ladite torche T2 par rapport à la torche fixe T1.

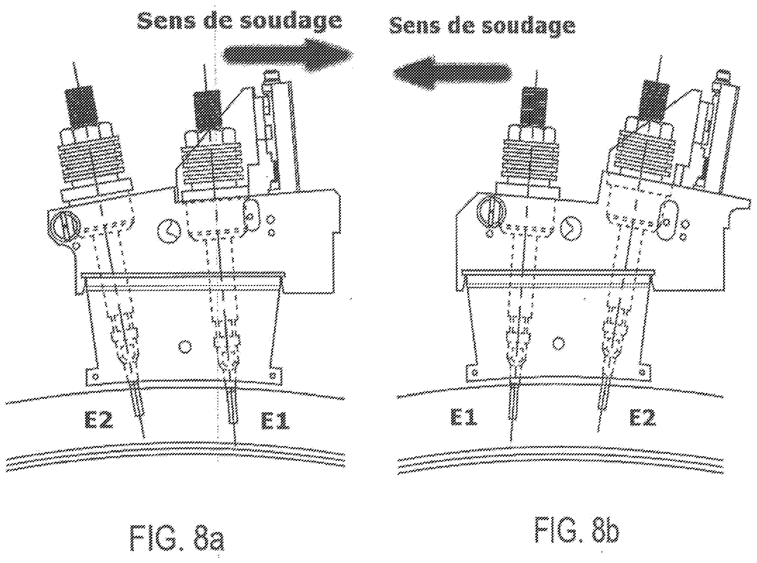

Il est alors possible d'avoir deux types de mécanique. Dans un premier type, la première torche ou torche origine est la torche fixe T1 sur le bloc support 8 ce qui permet un mouvement d'approche et une gestion de la hauteur de fil sorti tandis que la torche suiveuse est la torche mobile T2 dont le mouvement relatif indépendant de celui de la torche origine permet la gestion du fil sorti (cf. figure 8a).

Dans le second type, la torche suiveuse est la torche fixe T1 ce qui permet un mouvement d'approche et une gestion de la hauteur de fil sorti tandis que la torche origine est la torche mobile T2 dont le mouvement indépendant assure la gestion de fil sorti (c. figure 8b).

La torche mobile T2 est montée coulissante le long d'une glissière 24 ménagée sur le bloc-support 8.

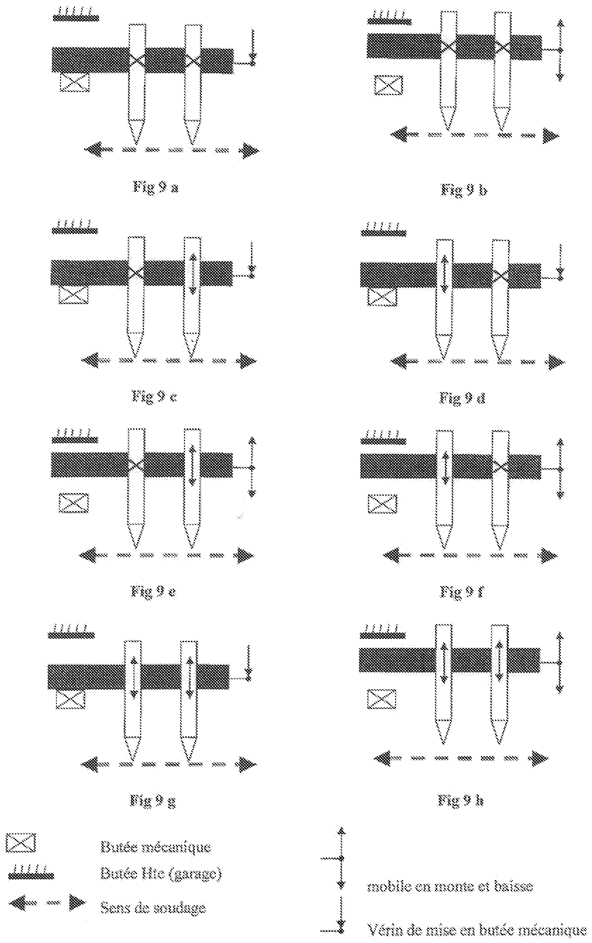

L'invention n'est bien entendu nullement limitée aux exemples donnés mais englobe également toutes les variantes comme on peut en voir aux figures 9a à 9h.

Ainsi, les figures 9a et 9b représentent un bloc support portant deux torches T1, T2 fixes sur le bloc, ledit bloc pouvant être fixe par rapport à une butée (figure 9b) ou mobile (figure 9b) ce qui permet une régulation de longueur de fil.

Le bloc support des figures 9c et 9d porte une torche mobile et une torche fixe, ledit bloc étant fixe sur une butée pour la figure 9c tandis que l'autre torche mobile en monte et baisse par rapport au bloc permet une gestion de longueur de fil de ladite torche.

Aux figures 9e et 9f, le bloc support est mobile en monte et baisse et porte une torche fixe ainsi qu'une torche mobile en monte et baisse par rapport au bloc. On propose donc ainsi une gestion de longueur de fil sur les deux torches.

Aux figures 9g et 9h, on propose un bloc qui porte deux torches mobiles en monte et baisse sur ledit bloc, à la figure 9g le bloc étant fixé sur une butée tandis qu'à la figure 9h, il est monté mobile également en monte et baisse.

L'invention n'est bien entendu nullement limitée aux exemples donnés.

## Revendications

1. Système mécanique de guidage automatique d'une ou de plusieurs torches d'une unité de soudage dans une gorge (3) délimitée par les surfaces d'extrémité chanfreinées de deux pièces métalliques à souder l'une à l'autre, du type comprenant
un guide circulaire (2) fixe durant l'utilisation plus ou moins parallèle à la gorge (3)
un chariot principal (1) qui se déplace le longdu guide circulaire (2),
un chariot secondaire (7) qui est relié au chariot principal (1) par un ensemble de liaison articulé (12) et qui est équipé d'un bloc-support de torche(s) et d'un dispositif de guidage comprenant des organes de roulement (10a, 10b) en contact durant l'utilisation avec les surfaces des pièces métalliques bordant ladite gorge (3) et des organes de palpage (11a, 11b) qui pénètrent durant l'utilisation à l'intérieur de la gorge (3),
le dispositif de guidage comprenant
- un premier ensemble de palpage et de roulement (10a, 11a) qui est situé à l'avant du chariot secondaire (7), en considérant le sens de déplacement du chariot principal (1) durant l'utilisation et qui comporte un organe de palpage avant (10a) en contact durant l'utilisation avec l'une des deux parois latérales de la gorge (3) et un organe de roulement avant (11a) roulant durant l'utilisation sur la surface de l'une des deux pièces métalliques d'un côté de la gorge
- et un deuxième ensemble de palpage et de roulement (10b, 11 b) qui est situé à l'arrière du chariot secondaire (7) et qui comporte un organe de palpage arrière (10b) en contact durant l'utilisation avec l'autre paroi latérale de la gorge (3) et un organe de roulement arrière (11b) roulant sur la surface de l'autre pièce métallique de l'autre côté de la gorge (3), la ou les torches (T1, T2) étant alors montées sur le chariot secondaire (7) de façon à se trouver entre les premier et second ensembles de palpage et de roulement (10a, 11 a ; 10b, 11b), l'ensemble de liaison articulé (12) comprenant
- un premier axe de pivotement (A1) qui est perpendiculaire à la direction du déplacement du chariot principal (1) et est situé dans un plan parallèle au plan du guide circulaire (2)
- et un deuxième axe de pivotement (A2) qui est perpendiculaire à la direction du déplacement du chariot principal (1) et perpendiculaire au plan du guide circulaire (2), les premier et second axes de pivotement (A1, A2) étant situés entre le premier et le second ensembles de palpage et de roulement (10a, 11a; 10b, 11b),
- des moyens de poussée latérale (20, 21) étant prévus qui agissent sur le chariot secondaire (7) pour le solliciter en pivotement autour du premier axe (A1) de manière à ce que chaque élément de palpage (10a, 10b) reste durant l'utilisation au contact de la paroi associée de la gorge (3) et des moyens de poussée qui sollicitent durant l'utilisation en permanence les organes de roulement (11 a, 11 b) du chariot secondaire (7) en appui sur les pièces métalliques qui y sont respectivement associées,
**caractérisé en ce que** l'ensemble de liaison (12) comprend en outre un troisième axe de pivotement (A3) qui est perpendiculaire à la direction du déplacement du chariot principal (1) durant l'utilisation et est situé dans un plan parallèle au plan du guide circulaire (2), ledit troisième axe de pivotement (A3) étant extérieur au bloc support de la ou des torche(s) (T1, T2) et des moyens de poussée étant prévus qui agissent sur le chariot secondaire (7) pour le solliciter en pivotement autour du troisième axe (A3) de manière à ce que l'axe de la ou des torches (T1, T2) puisse être confondu avec l'axe du plan de joint et que le chariot secondaire (7) revienne ensuite à son origine.

2. Système selon la revendication 1, **caractérisé en ce que** l'ensemble de liaison articulé (12) comporte un bras de liaison portant à une extrémité le chariot secondaire (7) au-dessus de la gorge (3) et qui, à son extrémité opposée, est monté sur le chariot principal par l'intermédiaire d'un moyeu (13), ledit bras étant monté pivotant sur le moyeu autour du troisième axe de pivotement (A3) perpendiculaire à la direction du déplacement du chariot principal (1) et situé dans un plan parallèle au plan médian de la gorge (3).

3. Système selon la revendication 2, **caractérisé en ce que** le bras de liaison (12) par l'intermédiaire du moyeu (13) est en outre monté pivotant sur le chariot principal (1), autour d'un quatrième axe (A4), perpendiculaire au plan de joint et au sens de déplacement du chariot principal (1), ledit bras de liaison étant entraînable en pivotement dans un plan sensiblement parallèle au plan du guide circulaire (2) entre une position où il est abaissé pour amener le chariot secondaire (7) sur le plan de joint pour effectuer un soudage et une position où il est relevé une fois le soudage achevé.

4. Système selon l'une des revendications 2 à 3, **caractérisé en ce que** le bras de liaison (12) est fixé sur le chariot principal (1) à l'aide du moyeu (13) qui porte un étrier (22) dont les flasques 22a présentent respectivement un orifice (22b) dans lequel se loge une extrémité du bras (12) portant à son autre extrémité le chariot secondaire (7), l'embase (22b) de l'étrier (22) étant fixée au moyeu (13) de manière à pivoter autour du troisième axe.de pivotement (A3), des moyens de poussée tels que des ressorts (23) étant prévus dans le moyeu qui agissent sur l'embase (22b) de l'étrier (22) pour le solliciter en pivotement autour dudit troisième axe A3.

5. Système selon l'une des revendications 3 et 4, **caractérisé en ce que** le moyeu (13) comporte à sa périphérie une languette (13b) en saillie radiale à l'extrémité de laquelle est montée l'extrémité de la tige d'un vérin (14), l'actionnement d'un vérin (14) déplaçant en translation l'extrémité de la languette (13b) en saillie et provoquant l'entraînement en rotation du moyeu (13) par rapport au chariot principal (1) autour du quatrième axe de pivotement (A4).

6. Système selon l'une des revendications 2 à 5,
**Caractérisé en ce que** le bras de liaison (12) est constitué d'une partie de bras (15) reliée à un boîtier de commande (16) sur lequel est monté une équerre (17) portant le chariot secondaire (7).

7. Système selon la revendication 6,
**Caractérisé en ce que** le boîtier de commande (16) est conformé pour porter les fixations des coffrets dévidoirs (18) de fil fusible (métal d'apport).

8. Système selon l'une des revendications 6 et 7,
**Caractérisé en ce que** l'extrémité libre de l'équerre (17) constitue une pièce de liaison venant en appui sur l'embase (19a) d'un étrier (19), l'axe de pivotement A1 du dispositif de guidage étant formé par un pivot dont une extrémité est solidaire de l'embase (19a) de l'étrier (19) et qui s'étend perpendiculairement à celle-ci, l'axe de pivotement A1 traversant un palier logé dans un passage prévu à l'extrémité de l'équerre (17) pour déboucher par son extrémité libre dans une ouverture centrale (17a) de l'équerre (17), l'extrémité libre de l'axe (A1) étant filetée pour recevoir un écrou (21) et immobiliser ainsi axialement l'axe (A1).

9. Système selon la revendication 8,
**Caractérisé en ce que** l'axe de pivotement (A2) du dispositif de guidage perpendiculaire à l'axe (A1) est supporté par les deux flasques (19b) de l'étrier (19), axe (A2) sur lequel est articulé un platine (7a) du chariot secondaire (7) qui porte le dispositif de guidage.

10. Système selon l'une des revendications 1 à 9, **caractérisé en ce que** le chariot secondaire (7) porte en outre un bloc-support (8) pour au moins une torche de soudage (TI), ledit bloc-support (8) étant mobile par rapport au chariot secondaire (7) de manière à pouvoir régler la profondeur de pénétration de la au moins une torche de soudage (TI) à l'intérieur de la gorge (3) après chaque passe de soudage.

11. Système selon la revendication 10, **caractérisé en ce que** le bloc-support (8) porte au moins deux torches de soudage mécaniquement liées par le bloc support (8), mais montées indépendantes dans leur fonction de monte et de baisse.

12. Système selon la revendication 11, **caractérisé en ce que** le bloc support (8) porte deux torches de soudage Tune desdites torches de soudage étant fixe (TI) par rapport au bloc-support et l'autre torche de soudage étant mobile (T2) par rapport au bloc-support (8) tel que montée coulissante le long d'une glissière (24) ménagée sur le bloc support (8) de manière à pouvoir régler la profondeur de pénétration de ladite torche par rapport à la torche fixe.

## Patentansprüche

1. Mechanisches System für die automatische Führung eines oder mehrerer Brenner einer Schweißmaschine innerhalb einer Nut (3), welche durch die abgeschrägten Stirnflächen zweier miteinander zu verschweißender Metallteile begrenzt ist, und das folgende Elemente umfasst:
eine feste kreisförmige Führung (2) während der Benutzung,
die mehr oder weniger parallel zur Nut (3) verläuft
einen Hauptschlitten (1), der sich entlang der kreisförmigen Führung (2), bewegt, einen Sekundärschlitten (7), der mit dem Hauptschlitten (1) durch eine Gelenkverbindung (12) verbunden ist und mit einem Trägerblock für den/die Brenner sowie einer Führungsvorrichtung ausgestattet ist, welche Rollelemente (10a, 10b) umfasst, die während der Benutzung in Kontakt
mit den Oberflächen der an die Nut (3) angrenzenden Metallteile ist, und Sensorvorrichtungen (11 a, 11 b), die während der Verwendung in die Nut (3) eindringen,
die Führungsvorrichtung, bestehend aus
- eine erste Sensor- und Lagerbaugruppe (10a, 11a), die vor dem Sekundärschlitten (7) angeordnet ist, wobei die Bewegungsrichtung des Hauptschlittens (1) während der Benutzung berücksichtigt wird.
und die eine vordere Sensorbaugruppe
(10a) umfasst, die während der Benutzung in Kontakt
mit einer der beiden Seitenwände der Nut (3) und einem vorderen Walzenelement (11a) ist, das während der Benutzung
über die Oberfläche eines der beiden
Metallteile auf einer Seite der Nut rollt,
- und eine zweite Sensor- und Rollenbaugruppe (10b, 11 b), die sich auf der Rückseite des Sekundärschlittens (7) befindet und ein hinteres Sensorgerät (10b) umfasst, das während der Benutzung
mit der anderen Seitenwand der
Nut (3) und einem hinteren Rollenelement (11 b) ist, das über die Oberfläche des anderen Metallteils auf der anderen Seite der Nut (3) rollt, wobei der oder die Brenner (T1, T2), die dann auf dem Sekundärschlitten (7) so montiert sind, dass er/sie sich zwischen der ersten und der zweiten Sensor-und Rollenbaugruppe (10a, 11a; 10b, 11 b)
befinden, wobei die Gelenkverbindung (12) folgende Elemente umfasst:
- eine erste Schwenkachse (A1), die senkrecht zur Bewegungsrichtung des Hauptschlittens (1) steht und in einer parallelen Ebene zur Ebene der kreisförmigen Führung (2) angeordnet ist
- und eine zweite Schwenkachse (A1), die senkrecht zur Bewegungsrichtung des Hauptschlittens (1) steht und senkrecht zur Ebene der kreisförmigen Führung (2) ist, wobei sich die erste und zweite Schwenkachse (Al, A2) zwischen der ersten und zweiten Sensor-und Rollenbaugruppe (10a, 11 a; 10b, 11 b) befinden,
- seitliche Vorspannvorrichtungen (20, 21), die auf den Sekundärschlitten (7) einwirken sollen, um eine Drehbewegung um die erste Achse (AI) zu erreichen, damit jedes Sensorelement (10a, 10b) während der Benutzung
in Kontakt mit der zugehörigen Wand der Nut (3) bleibt, und Vorspannvorrichtungen, die während der Benutzung
kontinuierlich auf die Rollenelemente (11 a, 11 b) des Sekundärschlittens (7) einwirken, welche auf den jeweils zugehörigen Metallteilen ruhen,
**dadurch gekennzeichnet, dass** das Gestänge (12) zudem eine dritte Schwenkachse (A3) senkrecht zur Bewegungsrichtung des Hauptschlittens (1) während der Benutzung aufweist und die parallel zur Ebene der kreisförmigen Führung (2) steht, wobei die dritte Schwenkachse (A3) sich außerhalb des Trägerblocks des oder der Brenner (T1, T2)
und der Vorspannvorrichtungen befindet, die auf den Sekundärschlitten (7) drücken, um dessen Schwenkbewegung um die dritte Achse (A3) zu bewirken, so dass die Achse des oder der Brenner (T1, T2) mit der Achse der Nahtebene verwechselt werden könnte, und damit der Sekundärschlitten (7) zu seinem Ursprung zurückkehrt.

2. System nach Anspruch 1, **dadurch gekennzeichnet, dass** die gesamte Gelenkverbindung (12) eine Verbindungsstange umfasst, die an einem Ende den Sekundärschlitten (7) oberhalb der Nut (3) trägt und am entgegengesetzten Ende auf dem Hauptschlitten mittels einer Nabe (13) angebracht ist, wobei diese Stange auf der Nabe um die dritte Schwenkachse (A3) senkrecht zur Bewegungsrichtung des Hauptschlittens (1) schwenkbar montiert ist, und parallel zur Mittelebene der Nut (3) liegt.

3. System nach Anspruch 2, **dadurch gekennzeichnet, dass** die Verbindungsstange (12) über die Nabe (13) außerdem auf dem Hauptschlitten (1) um eine vierte Achse (A4) montiert ist, die rechtwinklig zur Nahtebene und zur Bewegungsrichtung des Hauptschlittens (1) ist, wobei diese Verbindungsstange durch eine Drehung angetrieben werden kann, die weitgehend parallel zur Ebene der kreisförmigen Führung (2) zwischen den Positionen erfolgt, wenn sie abgesenkt wird, um den Sekundärschlitten (7) auf der Nahtebene zu bewegen, um die Schweißung durchzuführen, und einer Position, in die sie nach Abschluss der Schweißung angehoben wird.

4. System nach einem der Ansprüche 2 bis 3, **dadurch gekennzeichnet, dass** die Verbindungsstange (12) mit der Nabe (13) auf dem Hauptschlitten (1) befestigt ist, und diese Nabe einen Bügel (22) trägt, dessen Flansche 22a jeweils eine Öffnung (22b) haben, in denen ein Ende der Stange (12) aufgenommen wird, und an seinem anderen Ende den Sekundärschlitten (7) trägt, wobei die Basis (22b) des Bügels (22) so an der Nabe (13) befestigt ist, dass um die dritte Schwenkachse (A3) die Vorspannvorrichtungen wie beispielsweise Federn (23) in der Nabe vorgesehen sind, die auf die Basis (22b) des Bügels (22) einwirken, um deren Drehung um die dritte Achse A3 zu bewirken.

5. System nach einem der Ansprüche 3 und 4, **dadurch gekennzeichnet, dass** die Nabe (13) an ihrem Rand eine Lasche (13b) als radialen Überstand aufweist, an deren Ende das Ende einer Kolbenstange (14) montiert und die Betätigung eines Zylinders (14) ermöglicht, der mit Übersetzung dieser Bewegung das Ende der überstehenden Lasche (13b) bewegt und bewirkt, dass der Drehantrieb der Nabe (13) gegenüber dem Hauptschlitten (1) um die vierte Schwenkachse (A4) erfolgt.

6. System nach den Ansprüchen 2 bis 5,
**Dadurch gekennzeichnet, dass** die Verbindungsstange (12) aus einem Stangenabschnitt (15) besteht, der mit einem Steuergehäuse (16) verbunden ist, auf dem eine Klammer (17) befestigt ist, die den Sekundärschlitten (7) trägt.

7. System nach dem Anspruch 6,
**Dadurch gekennzeichnet, dass** dieses Steuergehäuse (16) so geformt ist, um die Befestigungen der Spulengehäuse (18) des Schmelzdrahts (Zusatzwerkstoffs) aufzunehmen.

8. System nach den Ansprüchen 6 und 7,
**Dadurch gekennzeichnet, dass** das freie Ende des Bügels (17) ein Verbindungsstück ist, das die Basis (19a) eines Bügels (19) stützt, die Schwenkachse A1 der Führungsvorrichtung aus einem Drehgelenk besteht, dessen eines Ende an der Basis (19a) des Bügels (19) befestigt ist, und das senkrecht zu dieser steht, die Schwenkachse A1 ein Lager durchläuft, das in einem an der Ende des Bügels (17) vorgesehenen Öffnung sitzt, und dessen freies Ende in einer mittleren Öffnung (17a) des Bügels (17) steckt und das freie Ende der Achse (A1) ein Gewinde aufweist, um eine Mutter (21) aufzunehmen und so die Achse (A1) in axialer Richtung zu fixieren.

9. System nach dem Anspruch 8,
**Dadurch gekennzeichnet, dass** die Schwenkachse (A2) der Führungsvorrichtung, die senkrecht zur Achse (A1) steht, durch die beiden Flansche (19b) des Bügels (19), Achse (A2) unterstützt wird, auf der eine Platte (7a) des Sekundärschlittens (7) drehend gelagert ist, der die Führungsvorrichtung trägt.

10. System nach einem der Ansprüche 1 bis 9, **dadurch gekennzeichnet, dass** der Sekundärschlitten (7) auch einen Trägerblock (8) für mindestens einen Schweißbrenner (T) umfasst, und der Trägerblock (8) im Verhältnis zum Sekundärschlitten (7) beweglich ist, um nach jeder Schweißlage die Eindringtiefe mindestens eines Schweißbrenners (T) innerhalb der Nut (3) einzustellen.

11. System nach Anspruch 10, **dadurch gekennzeichnet, dass** der Trägerblock (8) mindestens zwei durch den Trägerblock (8) mechanisch verbundene Schweißbrenner trägt, die aber hinsichtlich ihrer Auf- und Abwärtsbewegung unabhängig montiert sind.

12. System nach Anspruch 11, **dadurch gekennzeichnet, dass** der Trägerblock (8) zwei Schweißbrenner T trägt, wobei einer dieser Schweißbrenner im Verhältnis zum Trägerblock fixiert (T1) ist und der andere Schweißbrenner im Verhältnis zum Trägerblock (8) beweglich ist, beispielsweise montiert auf einer Schiene (24), die vom Trägerblock (8) so gehalten wird, dass die Eindringtiefe dieses Brenners im Verhältnis zum fixierten Brenner gesteuert werden kann.

## Claims

1. Automatic mechanical guide system for one or more torches of a welding unit in a groove (3) demarcated by the bevelled end surfaces of two metal parts to be welded together, of the type comprising
a main carriage (1) that moves along a fixed circular guide (2) during use more or less parallel to the groove (3), a secondary carriage (7) that is connected to the main carriage (1) by a jointed connecting assembly (12) and is equipped with a torch holder and a guide device comprising roller components (10a, 10b) in contact during use with the surfaces of the metal parts bordering said groove (3) and tracer components (11a, 11b) that enter into the groove (3) during use, the guide device comprising
- a first tracer and roller assembly (10a, 11 a) that is located at the front of the secondary carriage (7), in the direction of travel of the main carriage (1) during use and comprises a front tracer component (10a) in contact during use with one of the two side walls of the groove (3) and a front roller component (11a) rolling during use on the surface of one of the two metal parts on one side of the groove
- and a second tracer and roller assembly (10b, 11b) that is located at the rear of the secondary carriage (7) and comprises a rear tracer component (10b) in contact during use with the other side wall of the groove (3) and a rear roller component (11b) rolling on the surface of the other metal part on the other side of the groove (3), the torch(es) (T1, T2) then being mounted on the secondary carriage (7) so that they are between the first and second tracer and roller assemblies (10a, 11a; 10b, 11b), the jointed connecting assembly (12) comprising
- a first pivot axis (A1) is that is perpendicular to the direction of travel of the main carriage (1) and is located in a plane parallel to the plane of the circular guide (2)
- and a second pivot axis (A2) that is perpendicular to the direction of travel of the main carriage (1) and perpendicular to the plane of the circular guide (2), the first and second pivot axes (A1, A2) being located between the first and second tracer and roller assemblies (10a, 11a; 10b, 11b),
- lateral pushing means (20, 21) being provided that act on the secondary carriage (7) to urge it to pivot about the first axis (A1) so that each tracer component (10a, 10b) stays in contact during use with the associated wall of the groove (3) and pushing means that constantly, during use, push the roller components (11a, 11b) on the secondary carriage (7) against the metal parts respectively associated with them, **characterised in that** the connecting assembly (12) also comprises a third pivot axis (A3) that is perpendicular to the direction of travel of the main carriage (1) during use and is located in a plane parallel to the plane of the circular guide (2), said third pivot axis (A3) being outside the torch (T1, T2) holder
- and pushing means being provided that act on the secondary carriage (7) to urge it to pivot about the third axis (A3) so that the axis of the torch(es) (T1, T2) can be aligned with the axis of the mating surface and the secondary carriage (7) can then return to its original position.

2. System according to claim 1,
**characterised in that** the jointed connecting assembly (12) comprises a connecting arm holding the secondary carriage (7) above the groove (3) at one end, and the opposite end of which is mounted on the main carriage by means of a hub (13), said arm being mounted pivoting on the hub about the third pivot axis (A3) perpendicular to the direction of travel of the main carriage (1) and located in a plane parallel to the mid-plane of the groove (3).

3. System according to claim 2,
**characterised in that** the connecting arm (12), by means of the hub (13), is also mounted pivoting on the main carriage (1) about a fourth axis (A4), perpendicular to the mating surface and the direction of travel of the main carriage (1), it being possible to pivot said connecting arm in a plane more or less parallel to the plane of the circular guide (2) between a position in which it is lowered to bring the secondary carriage (7) onto the mating surface to perform a weld and a position in which it is raised once the weld is complete.

4. System according to one of claims 2 or 3,
**characterised in that** the connecting arm (12) is fixed to the main carriage (1) by means of the hub (13), which holds a stirrup (22) the flanges (22a) of which respectively have an aperture (22b) in which is housed one end of the arm (12) holding at its other end the secondary carriage (7), the base (22b) of the of the stirrup (22) being fixed to the hub (13) so that it pivots about the third pivot axis (A3), pushing means such as springs (23) being provided in the hub that act on the base (22b) of the stirrup (22) to urge it to pivot about said third axis A3.

5. System according to one of claims 3 or 4,
**characterised in that** the hub (13) comprises on its periphery a radially protruding tab (13b) at the end of which is mounted the end of the rod of a cylinder (14), the actuation of the cylinder (14) moving the end of the protruding tab (13b) in translation and causing the hub (13) to be rotated relative to the main carriage (1) about the fourth pivot axis (A4).

6. System according to one of claims 2 to 5,
**characterised in that** the connecting arm (12) is made up of an arm portion (15) connected to a control unit (16) on which is mounted a bracket (17) holding the secondary carriage (7).

7. System according to claim 6,
**characterised in that** the control unit (16) is configured to hold the fastenings for the filler wire (filler metal) feeders (18).

8. System according to one of claims 6 or 7,
**characterised in that** the free end of the bracket (17) forms a connecting part resting on the base (19a) of a stirrup (19), the pivot axis A1 of the guide device being formed by a pivot one end of which is integral with the base (19a) of the stirrup (19) and extends perpendicular to it, the pivot axis A1 passing through a bearing housed in a hole made in the end of the bracket (17) so that its free end opens out into a central opening (17a) in the bracket (17), the free end of the pivot (A1) being threaded to receive a nut (21) and thus axially immobilise the pivot (A1).

9. System according to claim 8,
**characterised in that** the pivot axis (A2) of the guide device perpendicular to the axis (A1) is held by the two flanges (19b) of the stirrup (19), and a plate (7a) of the secondary carriage (7) that holds the guide device is hinged on the axis (A2).

10. System according to claims 1 to 9,
**characterised in that** the secondary carriage (7) also has a holder (8) for at least one welding torch (T1), said holder (8) being mobile relative to the secondary carriage (7) so that the penetration depth of the at least one welding torch (T1) in the groove (3) can be adjusted after each weld pass.

11. System according to claim 10,
**characterised in that** the holder (8) holds at least two welding torches mechanically connected by the holder (8), but mounted so that they can move up and down independently.

12. System according to claim 11,
**characterised in that** the holder (8) holds two welding torches, one of said welding torches being fixed (T1) relative to the holder and the other welding torch being mobile (T2) relative to the holder (8), such as mounted sliding along a slide rail (24) arranged on the holder (8) so that the penetration depth of said torch can be adjusted relative to the fixed torch.
